# FASCICULE DE BREVET EUROPEEN

(11) **EP 0 530 093 B1**
(45) Date de publication et mention de la délivrance du brevet: **14.06.1995**
(21) Numéro de dépôt: 92402333.6
(22) Date de dépôt: 24.08.1992
(51) Int. Cl.: G01D 5/14, G01D 5/16, G01B 7/00, G01M 13/04

(54) **Capteurs linéaires de faibles déplacements à circuits magnétiques et roulements à billes équipés de tels capteurs**
Lineare Messwertgeber für kleine Verschiebungen in magnetischen Kreisen und mit solchen Gebern ausgestattete Kugellager
Linear measuring device for small movements in magnetic circuits and ball bearings eqipped with such measuring devices

(30) Priorité: 26.08.1991 FR 9110609
(43) Date de publication de la demande: 03.03.1993
(73) Titulaire: SNR ROULEMENTS, F-74000 Annecy (FR)
(72) Inventeur: Blache, Claire, F-75116 Paris (FR); Lemarquand, Guy, F-75116 Paris (FR)
(74) Mandataire: Ballot, Paul Denis Jacques

(56) Documents cités:
- EP-A- 0 464 403
- DE-B- 1 281 549
- DE-C- 3 804 767
- FR-A- 2 506 006
- FR-A- 2 574 501
- GB-A- 2 050 627
- GB-A- 2 207 510
- US-A- 3 742 243
- US-A- 4 966 041

## Description

L'invention concerne des capteurs linéaires de faibles déplacements à circuits magnétiques. De tels circuits sont adaptés à créer dans un entrefer, un champ magnétique présentant un gradient élevé constant le long d'une plage étroite.

Les capteurs linéaires de faibles déplacements usuels à circuits magnétiques sont de deux types à circuit magnétique fermé ou ouvert. Les circuits magnétiques fermés comprennent un ou plusieurs aimants permanents, et au moins une culasse de retour de flux, l'ensemble étant agencé pour produire dans un entrefer relativement étroit aménagé entre deux pôles opposés se faisant face, une induction relativement élevée dont une sonde mesure l'amplitude. Pour ce faire, des aimants à haute énergie sont de préférence utilisés : Samarium - Cobalt ou Néodyme - Fer - Bore, par exemple. Quant à la sonde de mesure, elle est du type à effet Hall ou à magnétorésistance.

Avec un capteur pourvu d'un circuit magnétique fermé, le signal fourni par la sonde de mesure est directement proportionnel au déplacement relatif, le long de l'axe de mesure, de la sonde et des pôles du circuit magnétique. Le gradient d'induction dépend de la forme, de la nature de l'aimant ainsi que la distance entre les deux pôles du circuit magnétique. De la sorte, deux types de résultats peuvent être obtenus : un gradient de 0,1 Tesla/mm environ sur une page de quelques millimètres ou un gradient de 1 Tesla/mm sur une plage de quelques dixièmes de millimètre, la plage de mesure étant dans les deux cas petite devant la largeur de l'entrefer.

Avec un capteur de déplacements pourvu d'un circuit magnétique ouvert dans lequel les pôles positif et négatif du circuit sont juxtaposés, les sensibilités sont nettement améliorées. On citera deux exemples connus de capteurs de ce second type.

Tout d'abord, le brevet US-A-4.966.041 qui décrit un dispositif magnétique de détection de déplacements linéaires présentant une sensibilité moyenne, c'est-à-dire possédant une linéarité de mesure s'étendant sur une douzaine de millimètres. A cet effet, ce capteur comporte un élément mobile pourvu d'un circuit magnétique ouvert, constitué par deux aimants identiques juxtaposés de manière à posséder une face plane présentant deux pôles opposés séparés par une ligne de champ nul. Les deux aimants sont installés dans un support réalisé en un matériau non-magnétique. En outre, ce capteur comporte un élément fixe équipé d'une sonde de mesure, constituée par deux composants à effet Hall disposés de part et d'autre de la ligne de champ nul lorsque le capteur est en position de repos.

Comme second exemple de capteurs de déplacement à circuit magnétique ouvert, ou citera le brevet français FR-A-2 506 066 qui décrit un dispositif magnétique pour déterminer la position d'un corps mobile en translation ou en rotation. Ce dispositif produit un signal d'amplitude variable entre deux extrêmes en fonction de la position instantanée du corps mobile par rapport à un élément sensible au champ magnétique. Dans une de ses deux formes de réalisation, le corps mobile en question comporte une suite alternée de zones aimantées de polarités opposées, séparées par des lignes de champ nul. Dans un tel dispositif, l'information utile est non pas l'amplitude instantanée du signal mais le nombre de ses variations entre ses amplitudes extrêmes.

Avec les capteurs de déplacements équipés de circuits magnétiques fermés, toute augmentation de l'intensité du gradient de champ le long de la plage linéaire de mesure se traduit par une diminution de la longueur de cette plage. Et l'expérience montre qu'avec de tels circuits, il est impossible de beaucoup augmenter la valeur du gradient dans l'entrefer tout en conservant une plage de mesure linéaire d'une étendue suffisante. De telles spécifications améliorées sont pourtant requises pour la construction de capteurs linéaires de faibles déplacements répondant aux nouveaux besoins de l'industrie.

L'objet de l'invention est de réaliser des capteurs linéaires de faibles déplacements à très haute sensibilité, équipés de circuits magnétiques ouverts nouveaux et perfectionnés, adaptés à créer dans un entrefer un gradient de champ magnétique constant, ayant une intensité et une étendue notablement plus grandes que celles obtenues jusqu'à présent.

L'invention concerne plus particulièrement l'application d'un tel capteur nouveau à la construction de roulement à billes dont les deux éléments, respectivement fixe et mobile tournant présentent des micro-déplacements axiaux et/ou radiaux qu'il est important de pouvoir mesurer.

Selon l'invention, un capteur linéaire de faibles déplacements à haute sensibilité du genre comportant un circuit magnétique ouvert et une sonde de mesure de champ, ledit circuit étant formé par deux aimants permanents sensiblement identiques juxtaposés et rigidement liés ensemble de manière à présenter une face continue sur laquelle apparaissent un pôle Nord et un pôle Sud, séparés l'un de l'autre par une ligne de champ nul chevauchée par ladite sonde, caractérisé en ce que :
- les deux aimants sont liés l'un à l'autre par une première culasse de retour de flux à haute perméabilité magnétique,
- une seconde culasse de retour de flux est disposée en regard de ladite face continue ;
- l'espace entre la seconde culasse et la face continue des aimants constitue un entrefer faible devant sa largeur et sa longueur.

Grâce à ces dispositions, le champ magnétique créé dans l'entrefer présente un gradient élevé constant de part et d'autre de la ligne de champ nul et la plage de cette variation linéaire du champ est relativement large par rapport à l'épaisseur de l'entrefer. Ces deux caractéristiques résultent des dimensions relatives de l'entrefer d'une part, et de la disposition nouvelle des deux aimants, d'autre part.

Selon une caractéristique complémentaire de la précédente, la seconde culasse de retour de flux est constituée par un circuit magnétique ouvert semblable au précédent mais avec des polarités en vis-à-vis opposées, les deux lignes de jonction des aimants étant placées en regard l'une de l'autre.

Grâce à cette disposition, le gradient de champ magnétique est augmenté de trente pour cent environ.

Selon une caractéristique de l'invention, les aimants et les culasses de retour de flux du circuit magnétique ont la forme d'anneaux coaxiaux, l'épaisseur de l'entrefer et la polarisation des aimants étant soit axiales soit radiales.

Grâce à ces dispositions, il est possible de construire des capteurs linéaires, de faibles déplacements par exemple axiaux (entrefer radial) ou radiaux (entrefer axial), entre deux des éléments d'un dispositif tournant, un roulement à billes par exemple.

Les caractéristiques et avantages de l'invention ressortiront d'une manière plus précise de la description ci-après donnée à titre d'exemples non limitatifs en référence aux dessins annexés dans lesquels :
- la figure 1 est une vue perspective simplifiée d'un circuit magnétique dissymétrique à section rectangulaire;
- la figure 2 illustre la courbe de variation du champ magnétique dans l'entrefer du circuit de la figure 1 ;
- la figure 3 est une coupe transversale d'un circuit magnétique symétrique à section rectangulaire;
- les figures 4 et 5 sont des coupes transversales de deux circuits magnétiques respectivement dissymétriques et symétriques, utilisant des aimants à section triangulaire;
- la figure 6 est une coupe transversale d'un circuit magnétique double utilisant des aimants à section rectangulaire et d'autres à section triangulaire.
- la figure 7 est une vue perspective de la coupe diamétrale d'un circuit magnétique en anneaux à polarisation axiale;
- la figure 8 est une vue perspective de la coupe diamétrale d'un circuit magnétique en anneaux à polarisation radiale;
- les figures 9 et 10 sont des sections de roulements à billes équipés de capteurs de déplacement symétrique à sensibilités axiale et radiale respectivement, et
- les figures 11 et 12 sont des sections de roulements à billes équipés de capteurs de déplacement dissymétriques, à sensibilités axiale et radiale respectivement.

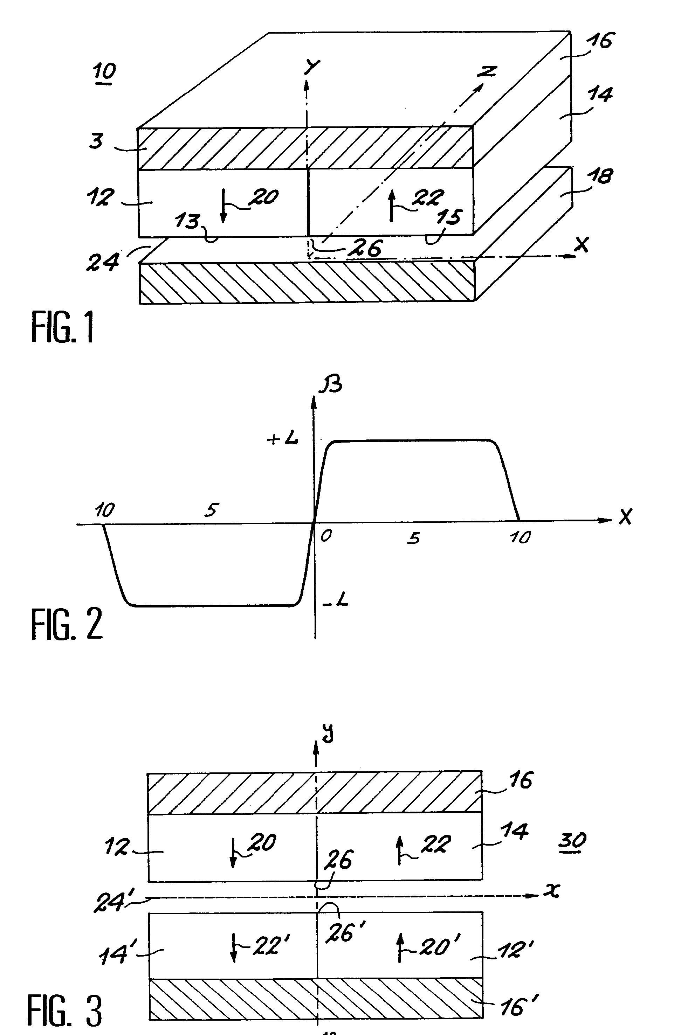

Selon la figure 1, la vue perspective simplifiée d'un circuit magnétique dissymétrique 10 fait apparaître les sections transversales rectangulaires de deux aimants permanents parallélépipédiques 12 et 14, avec leurs faces étroites juxtaposées et leurs faces larges 13-15 se prolongeant l'une l'autre. Le rapport des dimensions du grand et du petit côté du rectangle des sections des aimants est voisin de deux. La dimension longitudinale des aimants 12-14 est au moins égale au grand côté du rectangle de leur section transversale. Les deux aimants 12-14 sont rigidement liés l'un à l'autre par une première culasse de retour de flux 16. En regard des faces larges des aimants 12-14 est disposée une seconde culasse de retour de flux 18 identique à la première. Les sens 20-22 de polarisation des aimants sont opposés l'un à l'autre et perpendiculaires aux faces larges 13-15. L'espace étroit compris entre ces faces larges 13-15 et la seconde culasse 18 constitue un entrefer 24 ayant une épaisseur faible, par rapport à sa largeur. Une ligne de champ nul apparaît sur la ligne de jonction 26 des aimants 12-14. Des moyens non représentés (cales amagnétiques, par exemple) assurent le maintien de la culasse 18 en face des aimants 12-14. Les aimants 12-14 sont du type à haute énergie, Céramique de Néodyme - Fer - Bore, par exemple, et les culasses 16-18 sont réalisées en matériau ferromagnétique doux, à haute perméabilité, du fer pur par exemple.

Selon la figure 2 est représentée la courbe des variations du champ magnétique dans un entrefer 24 ayant deux millimètres d'épaisseur et vingt millimètres de largeur. Au centre de l'entrefer 24, au droit de la ligne de jonction 26 des aimants 12-14, représenté par le point origine O de la figure 2, le champ magnétique est nul. Dans une plage centrale de 0,8 millimètre de largeur totale disposée de part et d'autre de cette origine, le champ magnétique varie, à peu près linéairement de -L à +L. Dans le circuit magnétique assymétrique de la figure 1, le gradient du champ (ou la pente de la droite) est égale à 0,85.J/d avec J la valeur de la rémanence du matériau de l'aimant en Tesla et d, la valeur de l'épaisseur de l'entrefer en millimètres. La valeur maximale de L (ou limite) est égale à J.a/(a+d), avec a l'épaisseur de l'aimant et d l'épaisseur de l'entrefer. Après avoir atteint sa limite positive ou négative le long de l'axe X de l'entrefer, le champ magnétique reste sensiblement constant, depuis des abscisses positives et négatives allant en valeur absolue de 0,4 mm à 9 mm environ. Ensuite, de 9 mm à 10 mm, cette valeur retombe à zéro. L'étude de cette courbe montre qu'une diminution importante du rapport entre la largeur et l'épaisseur de l'entrefer peut être acceptée mais, pour éviter de diminuer l'étendue de la plage linéaire, une plage de garde est aménagée et, à cet effet, le rapport ci-dessus ne sera pas inférieur à cinq.

A titre d'exemple, on notera qu'avec deux petits aimants identiques à haute énergie (J = 1,25T) tels que 12 et 14, ayant une base carrée de un centimètre de côté et une épaisseur de un demi centimètre, d'une part, et une seconde culasse à haute perméabilité aménageant un entrefer soit d'un millimètre, soit de deux millimètres d'autre part, le gradient de champ magnétique dans la plage linéaire a été mesuré dans le premier cas égal à 1 Tesla/mm sur une plage linéaire longue de 0,4 millimètre dans un entrefer d'un millimètre d'épaisseur et dans le deuxième cas, égal à 0,5 Tesla/mm sur une plage linéaire longue de 0,8 millimètre dans un entrefer de deux millimètres d'épaisseur. Ce qui est très supérieur aux résultats de toutes réalisations antérieures de circuits magnétiques ayant les mêmes dimensions.

On notera par ailleurs que le champ magnétique varie notablement le long d'un axe Y perpendiculaire aux faces 13-15 des aimants et qu'il est sensiblement constant le long de l'axe Z perpendiculaire aux axes X et Y.

Les variations du gradient de champ magnétique le long de l'axe Y représentent environ 1,5% de la valeur du gradient de champ par décalage unitaire de sonde, égal à un pour cent de l'épaisseur d'entrefer, dans la partie centrale de cette épaisseur. Une telle variation impose de caler avec précision et stabilité la sonde de mesure dans l'entrefer.

Selon la figure 3, la coupe transversale d'un circuit magnétique symétrique 30 fait apparaître deux paires d'aimants 12-14 et 12′-14′ respectivement associées à deux premières culasses de retour de flux 16 et 16′. Les lignes de champ nul 26 et 26′ de chaque paire d'aimants sont en regard l'une de l'autre. L'entrefer 24′ a les mêmes dimensions que l'entrefer 24 de la figure 1. Le résultat est double : une augmentation de 30% environ de l'intensité du gradient de champ magnétique dans la plage linéaire située de part et d'autre du plan qui joint les lignes de champ nul 26-26′ et une réduction par trois environ des variations du gradient de champ le long de l'axe Y.

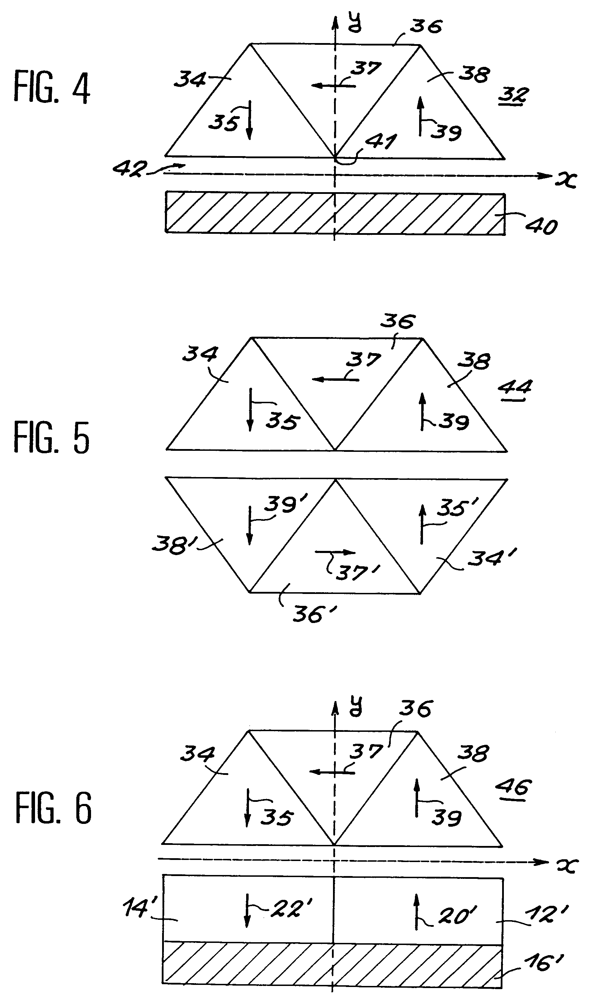

Selon la figure 4, la coupe transversale d'un circuit magnétique dissymétrique 32 fait apparaître trois aimants à sections triangulaires isocèles identiques 34-36-38 tels que l'angle entre la base et chacun des côtés égaux est environ égal à 67,5°. Ces aimants sont disposés de manière à représenter un trapèze isocèle ayant une grande base de longueur double de la petite. Les sens de polarisation 35-39 des aimants d'extrémité 34-38 sont opposés et perpendiculaires à la grande base et le sens de polarisation 37 de l'aimant intermédiaire 36 est parallèle à la petite base du trapèze et en continuité de flux avec les deux autres 34-38. En regard de la grande base du trapèze, est disposée une culasse de retour de flux 40 de manière à ménager un entrefer 42 dans lequel une ligne de champ nul apparaît le long de la ligne de liaison 41 des aimants 34-38. Avec les matériaux pour les aimants 34-36-38 et la culasse 40 respectivement identiques à ceux des aimants 12-14 et de la culasse 18 de la figure 1 et avec des dimensions identiques pour les culasses 40 et 18, l'intensité du gradient de champ magnétique que l'on obtient est supérieure de vingt pour cent environ à celle obtenue avec le circuit magnétique dissymétrique 10 de la figure 1, la longueur de la plage linéaire n'étant pas modifiée. Ce résultat amélioré est la conséquence de la présence de l'aimant intermédiaire 36 en lieu et place d'une culasse en fer doux 16.

Selon la figure 5, la coupe transversale d'un circuit magnétique symmétrique 44 fait apparaître deux groupes de trois aimants 34-36-38 et 34′-36′-38′ séparés l'un de l'autre par un entrefer étroit 42′, les sens des polarisations des aimants étant indiqués par les flèches 35-37-39 et 35′-37′-39′. Les lignes de jonction des aimants sont en regard l'une de l'autre. Grâce à cette disposition, l'intensité du gradient de champ magnétique dans la plage linéaire est augmentée de quarante-trois pour cent par rapport à celle obtenue avec le circuit magnétique asymétrique 10 selon la figure 1 et de seize pour cent par rapport à celle obtenue, avec le circuit magnétique symétrique 30 selon la figure 3.

Selon la figure 6 est représentée la coupe transversale d'un circuit magnétique double 46 comportant deux sous-ensembles actifs respectivement constitués par trois aimants 34-36-38 pour l'un et deux aimants 12′-14′ et une culasse de retour de flux 16′ pour l'autre. Les résultats obtenus avec un tel assemblage sont, bien entendu, intermédiaires entre ceux obtenus avec des circuits magnétiques 30 et 44 selon les figures 3 et 5. A cet égard, on remarquera que les formes des sections transversales des aimants principaux 12-14 ou 34-38 et celles des culasses 16-18-40 peuvent être différentes de celles représentées et notamment être des trapèzes isocèles.

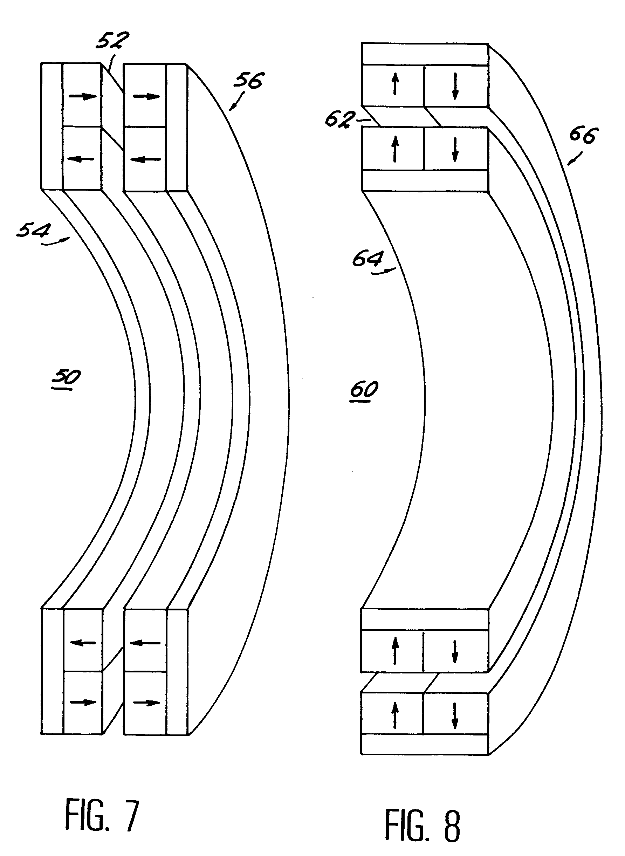

Selon la figure 7 est représentée la vue perspective d'une coupe diamétrale d'un circuit magnétique annulaire symétrique 50 à entrefer à épaisseur axiale 52. Il comprend deux paires 54-56 d'aimants en anneaux, liés par une culasse en couronne, leurs sections transversales étant représentées à la figure 3. La sensibilité de ce circuit 50 est radiale.

Selon la figure 8 est représentée la vue perspective d'une coupe diamétrale d'un circuit magnétique annulaire symétrique 60 à entrefer à épaisseur radiale 62. Il comprend deux paires 64-66 d'aimants en anneaux, reliés par une culasse en couronne, leurs sections transversales étant représentées à la figure 3. La sensibilité de ce circuit 60 est axiale.

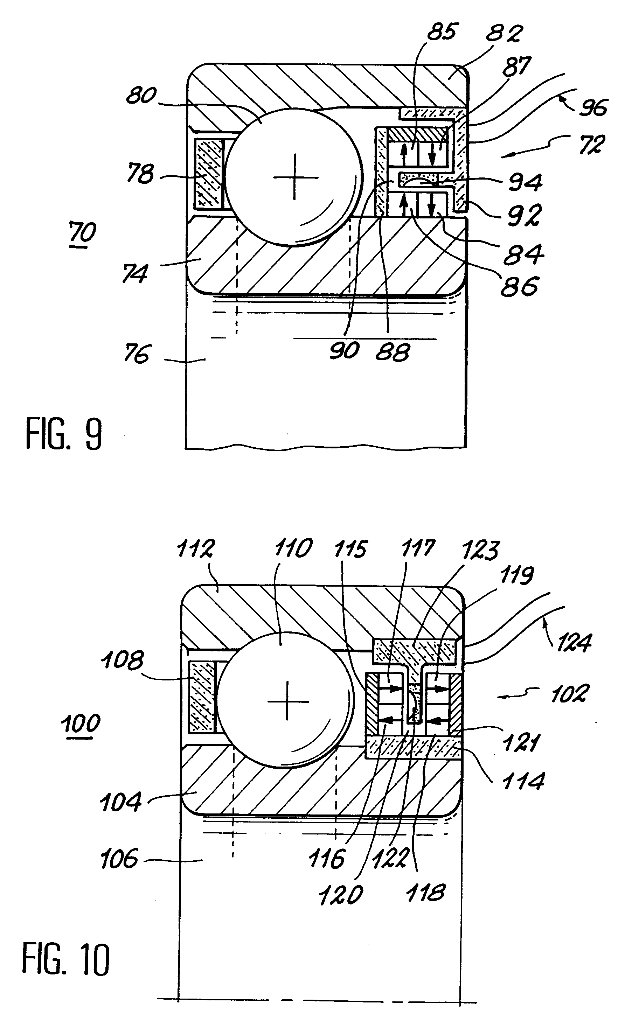

Selon la figure 9 est représentée la coupe transversale d'un roulement à billes 70 pourvu d'un capteur linéaire 72 de faibles déplacements axiaux. Le roulement à billes 70 comprend une bague intérieure 74 montée fixe sur un arbre tournant 76, une cage annulaire 78 emprisonnant les billes 80 du roulement et une bague extérieure 82 solidaire d'un support fixe non représenté. Sur la bague intérieure 74 est fixé par collage un circuit magnétique annulaire symétrique à polarisations radiales opposées semblable à celui représenté à la figure 8 et comprenant un double anneau intérieur 84-86 et un double anneau extérieur 85-87. Par rapport à la section du circuit magnétique de la figure 8, on remarquera tout d'abord que le double anneau intérieur 84-86 ne comprend pas de culasse de retour de flux : cet élément est supprimé pour gagner de la place et remplacé par la bague intérieure 74 du roulement 70, réalisée en un acier à haute perméabilité magnétique. Les deux paires d'anneaux 84-86 et 85-87 sont rigidement liées l'une à l'autre par une couronne 88 réalisée en matériau amagnétique de manière à constituer un entrefer annulaire 90 à épaisseur radiale. Sur la bague extérieure 82 du roulement à billes 70 est monté fixe le support 92 d'une sonde de mesure 94 disposée entre les anneaux 84-86 et 85-87 au milieu de l'épaisseur de l'entrefer 90. La section du support 92 a la forme d'un F. La sonde de mesure 94 est raccordée par un câble de liaison 96 à un circuit de traitement non représenté. Grâce au gradient de champ magnétique élevé engendré dans l'entrefer annulaire 90, l'arbre 76 étant tournant, la sonde de mesure 94 (qui peut être un élément à effet Hall modèle KSY14 de Siemens) engendre un signal analogique relativement important représentatif des faibles déplacements axiaux relatifs (de 10 à 100 microns d'amplitude) des bagues 74 et 82 du roulement 70. De tels déplacements sont la conséquence des déformations élastiques que subissent les bagues 74-82 et les billes 80, sous l'action d'efforts axiaux appliqués à l'arbre 76 et/ou au support (non représenté) de la bague extérieure 82 du roulement.

Selon la figure 10 est représentée la coupe transversale d'un roulement à billes 100 pourvu d'un capteur linéaire 102 de faibles déplacements radiaux. Le roulement à billes 100 comprend une bague intérieure 104 montée fixe sur un arbre tournant 106, une cage annulaire 108 emprisonnant chacune des billes 110 du roulement et une bague extérieure 112 solidaire, d'un support fixe non représenté. Sur la bague intérieure 104, est fixée par collage sur une couronne intercalaire 114 totalement amagnétique sur laquelle sont fixés par collage, deux paires d'anneaux aimantés, à polarisations axiales opposées 116-117 et 118-119, respectivement fixées à deux culasses en couronne 115 et 121 semblables aux deux anneaux 54 et 56 de la figure 7, et séparées par un entrefer à épaisseur axiale 120. Sur la bague extérieure 112 du roulement 100 est monté fixe le support 123 ayant une section en forme de T, d'une sonde de mesure 122 disposée entre les paires d'anneaux 116-117 et 118-119 au milieu de l'épaisseur de l'entrefer 120. La sonde de mesure 122 est raccordée par un câble de liaison 124 à un circuit de traitement non représenté. Grâce à la grande sensibilité de cette disposition, l'arbre 106 étant tournant, la sonde de mesure 122 engendre un signal analogique relativement important représentatif des faibles déplacements radiaux relatifs (de 10 à 100 microns d'amplitude) des bagues 104 et 112 du roulement 110 qui résultent des efforts radiaux appliqués à l'arbre 106, et/ou au support (non représenté) de la bague extérieure 112 du roulement.

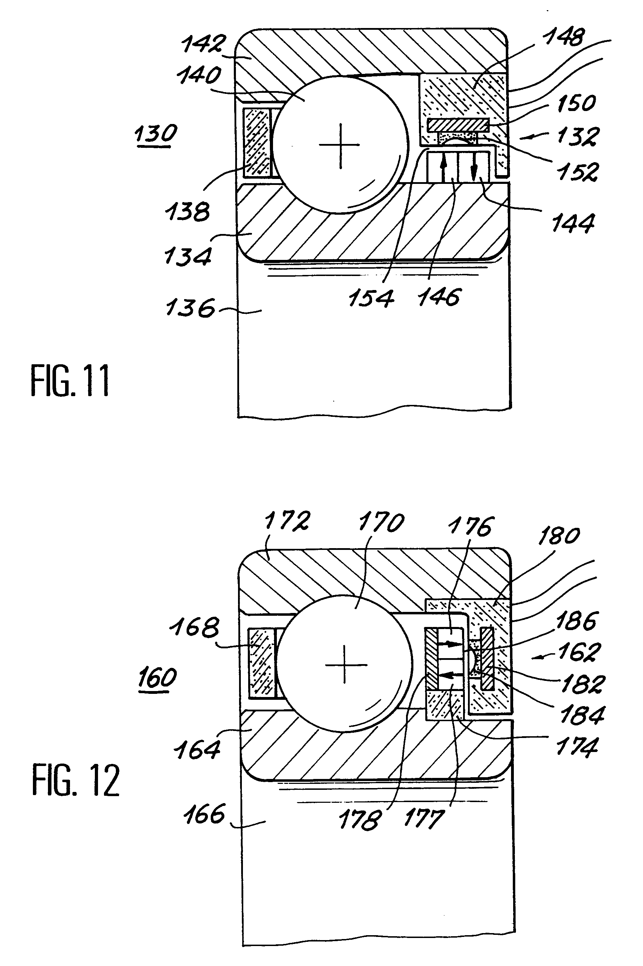

Selon la figure 11, est représenté un roulement à billes 130 pourvu d'un capteur linéaire 132 de faibles déplacements axiaux équipé d'un circuit magnétique annulaire dissymétrique. Le roulement 130 comprend une bague intérieure 134 montée fixe sur un arbre tournant 136, une cage annulaire 138 emprisonnant chacune des billes 140 du roulement et une bague extérieure 142 solidaire d'un support fixe non représenté. Sur la bague intérieure 134, réalisée en un acier à haute perméabilité, sont collés deux anneaux juxtaposés de même forme, 144-146, aimantés radialement en sens opposés, la bague intérieure 134 constituant l'équivalent de la première culasse de retour de flux 16 de la figure 1. Sur la bague extérieure 142 est fixé un support 148 en matériau amagnétique à section pratiquement carrée, dans lequel sont enchâssés un petit bloc 150, en forme de couronne (ou de secteur de couronne) réalisé en matériau ferromagnétique à haute perméabilité, et une sonde de mesure 152. La dimension transversale du bloc 150 est égale, à celle du double anneau 144-146.

L'écart - constant - entre le bloc 150 et ces anneaux 144-146 constitue un entrefer 154. Le bloc 150 à haute perméabilité magnétique constitue l'équivalent de la seconde culasse de retour de flux 18 du circuit magnétique dissymétrique 10 de la figure 1.

Si l'on compare le capteur linéaire 72 à sensibilité axiale de la figure 9 et le capteur 132 de la figure 11, en admettant que les paires d'aimants annulaires 144-146 et 84-86 sont identiques de même que les épaisseurs d'entrefers 154 et 90 et les sondes de mesure 152 et 94, on voit, en référence à ce qui a été dit plus haut, que la sensibilité du capteur 132 est inférieure de trente pour cent environ à celle du capteur 72. Une telle sensibilité moindre est cependant compensée par une plus grande simplicité de construction et une plus grande robustesse du capteur 132 par rapport au capteur 72.

Selon la figure 12 est représenté un roulement à billes 160 pourvu d'un capteur linéaire 162 de faibles déplacements radiaux, équipé d'un circuit magnétique annulaire dissymétrique. Le roulement 160 comprend une bague intérieure 164 montée fixe sur un arbre tournant 166, une cage annulaire 168 emprisonnant des billes 170 du roulement et une bague extérieure 172, solidaire d'un support fixe non représenté. La bague intérieure 164 est de préférence réalisée en acier à faible perméabilité magnétique et sur cette bague 164 est fixée par collage une couronne intermédiaire 174, totalement amagnétique, sur laquelle sont fixés par collage deux anneaux aimantés juxtaposés 176-177 à polarisations axiales opposées, rigidement liés ensemble par une culasse de retour de flux en forme de couronne plane 178, le tout étant semblable à la paire d'anneaux 54 de la figure 7. Sur la bague extérieure 172, est fixé par collage un support 180 en matériau amagnétique dans lequel est enchâssé un petit bloc 182 en forme de couronne ou de secteur de couronne, réalisé en matériau ferromagnétique à haute perméabilité sur lequel est collée une sonde de mesure 184. La dimension transversale du bloc 182 est égale à celle de la paire d'aimants annulaires 176-177. L'écart constant entre le bloc 182 et la partie des aimants annulaires 176-177 qui lui fait face à un moment donné constitue un entrefer 186 au milieu duquel est disposée la sonde de mesure 184. Le bloc 182 constitue la seconde culasse de retour de flux du circuit magnétique ouvert formé par la paire d'aimants 176-177 et la couronne 178. Tous les commentaires, faits ci-dessus pour les capteurs 72 et 132 de déplacements axiaux, s'appliquent mutatis mutandis aux capteurs 102 et 162 de déplacements radiaux des figures 10 et 12.

L'invention n'est pas limitée à la seule application décrite, c'est-à-dire la mesure des microdéplacements axiaux et/ou radiaux subis par les bagues des roulements à billes. Elle s'applique aussi à la mesure de tous microdéplacements et notamment ceux qui apparaissent dans les capteurs de pression à membrane, les capteurs de force, les accéléromètres ou les gyromètres.

Par ailleurs, les circuits magnétiques selon l'invention peuvent, bien entendu, être commercialisés en tant que tels en vue de permettre la construction de capteurs linéaires de microdéplacements, de type quelconque. Par ailleurs, la forme rectangulaire des sections des aimants annulaires des figures 7 à 12, n'est bien entendu pas limitative, des sections triangulaires conformes à celles représentées aux figures 4, 5 et 6 pouvant tout aussi bien convenir.

## Revendications

1. Capteur linéaire (72-102) de faibles déplacements apparaissant entre deux éléments d'un ensemble respectivement solidaires d'un circuit magnétique ouvert (10-32) et d'une sonde de mesure de champ (94-122), ledit circuit magnétique comprenant deux aimants permanents (12-14 ou 34-38) sensiblement identiques, juxtaposés et rigidement liés ensemble, de manière à présenter une face continue sur laquelle apparaissent un pôle Nord (20 ou 35) et un pôle Sud (22 ou 39), séparés l'un de l'autre par une ligne de champ nul (26 ou 41) chevauchée par ladite sonde ; caractérisé en ce que :
- les deux aimants (12-14 ou 34-38) sont liés l'un à l'autre, par une première culasse de retour de flux (16 ou 36), à haute perméabilité magnétique ;
- une seconde culasse (18 ou 40) de retour de flux est disposée en regard de la face continue des aimants (12-14 ou 34-38) ;
- l'espace, entre la seconde culasse (18 ou 40) et la face continue des aimants, constitue un entrefer (24 ou 42) d'épaisseur faible devant sa largeur et sa longueur.

2. Capteur selon la revendication 1, caractérisé en ce que dans le circuit magnétique les sections transversales des aimants (34-38) sont des triangles isocèles et en ce que la première culasse de retour de flux est un troisième aimant (37) ayant sa base parallèle à celles des deux autres et sa polarisation (37) orientée parallèlement à sa base, en continuité de flux avec les autres (35-39).

3. Capteur selon la revendication 1, caractérisé en ce que la seconde culasse de retour de flux est constituée par un autre circuit magnétique ouvert (12′-14′-16′ ou 34′-36′-38′) semblable au précédent, (12-14-16 ou 34-36-38) dans lequel les polarités des aimants sont inversées, les deux lignes (26-26′) de jonction des aimants étant placées en regard l'une de l'autre.

4. Capteur selon l'une des revendications précédentes, caractérisé en ce que les aimants et les culasses de retour de flux sont des anneaux coaxiaux (54-56 ou 64-66), lesdits aimants étant polarisés soit radialement soit axialement.

5. Roulement à billes (70) du genre comprenant une bague intérieure (74), une cage annulaire (78), des billes (80), une bague extérieure (82), l'une des deux bagues étant tournante et l'autre fixe en rotation ; et un capteur (72) pour mesurer des déplacements relatifs axiaux de ces deux bagues, caractérisé en ce que ledit capteur (72) est d'un type magnétique conforme à la revendication 3 et comprend :
- une première paire d'aimants annulaires sensiblement identiques (84-86) pourvus des polarités opposées et orientées radialement, lesdits aimants étant juxtaposés et montés fixes sur la bague tournante (74), laquelle présente une haute perméabilité magnétique ;
- une seconde paire d'aimants annulaires sensiblement identiques (85-87) pourvus de polarités opposées orientées radialement, lesdits aimants étant juxtaposés et montés fixes sur une culasse annulaire de retour de flux de manière à présenter des pôles contraires et une ligne de jonction en regard de celle de la première paire d'aimants ;
- un support annulaire en matériau amagnétique agencé pour maintenir un entrefer (90) d'épaisseur constante, faible devant les deux autres dimensions, entre les faces en regard des deux paires d'aimants (84-86 et 85-87) ;
- une sonde de mesure (94) disposée au centre de l'entrefer (90) au droit des lignes de jonction des aimants de chaque paire, ladite sonde étant montée fixe sur un petit support en matériau amagnétique (92) solidaire de la bague fixe (82) du roulement.

6. Roulement à billes (100) du genre comprenant une bague intérieure (104), une cage annulaire (108), des billes (110), une bague extérieure (112), l'une des deux bagues étant tournante et l'autre fixe en rotation et un capteur (102) pour mesurer des déplacements relatifs radiaux de ces deux bagues, caractérisé en ce que ledit capteur (102) est d'un type magnétique conforme à la revendication 3 et comprend :
- deux paires (116-117 et 118-119) d'aimants annulaires sensiblement identiques pourvus de polarités opposées orientées axialement, lesdits aimants d'une paire étant respectivement juxtaposés et rigidement liés ensemble par une culasse de retour de flux (115-121) réalisée en matériau à haute perméabilité magnétique en forme de couronne plane, lesdits paires étant montées fixes sur une même couronne intercalaire (114) en matériau amagnétique solidaire de la bague tournante (104), lesdites paires d'aimants annulaires en regard l'une de l'autre, à placer les lignes de jonction des aimants des deux paires en regard l'une de l'autre et à maintenir un entrefer (120) d'épaisseur constante, faible devant les deux autres dimensions, entre les faces en regard des deux paires d'aimants annulaires (116-117 et 118-119) ;
- une sonde de mesure (122) disposée au centre de l'entrefer (120) au droit des lignes de jonction des aimants de chaque paire, ladite sonde étant montée fixe sur un support (123), en matériau amagnétique, solidaire de la bague fixe (112) du roulement.

7. Roulement à billes (130) du genre comprenant une bague intérieure (134), une cage (138), des billes (140) une bague extérieure (142), l'une de ces bagues étant fixe en rotation et l'autre tournante, et un capteur (132) pour mesurer des déplacements relatifs axiaux de ces deux bagues, caractérisé en ce que ledit capteur (132) est d'un type magnétique conforme à la revendication 1 et comprend :
- une paire d'aimants annulaires (144-146) sensiblement identiques, pourvus de polarités opposées radialement orientées, juxtaposés et montés fixes sur la bague tournante (136), laquelle présente une haute perméabilité magnétique et constitue la première culasse de retour de flux ;
- un support (148) en matériau amagnétique, monté fixe sur la bague fixe (142) ;
- une seconde culasse de retour de flux, constituée par un bloc (150) réalisé en matériau à haute perméabilité magnétique, en forme de couronne ou de secteur de couronne ayant une largeur axiale de section transversale sensiblement égale à celle de la paire d'aimants, ledit bloc (150) étant disposé par rapport à la partie des aimants annulaires (144-146) qui lui fait face, de manière à constituer un entrefer (154) d'épaisseur sensiblement constante, faible devant sa largeur ;
- une sonde (152) de mesure de champ magnétique, collée audit bloc (150) sur le support (148) de manière à être disposée sensiblement au centre de l'entrefer (154).

8. Roulement à billes (160) du genre comprenant une bague intérieure (164), une cage annulaire (168), des billes (170), une bague extérieure (172), l'une de ces bagues étant fixe en rotation et l'autre tournante, et un capteur (162) pour mesurer des déplacements relatifs radiaux de ces deux bagues, caractérisé en ce que ledit capteur (162) est d'un type magnétique conforme à la revendication 1 et comprend :
- une paire d'aimants annulaires (176-177) ayant des sens de polarisation opposés et axialement orientées, lesdits aimants étant juxtaposés, rigidement liés ensemble par une première culasse de retour de flux en forme de couronne plane (178) réalisée en matériau à haute perméabilité magnétique et fixés par collage à une couronne intermédiaire (174) en matériau amagnétique, solidaire de la bague tournante (164) ;
- un support (180) en matériau amagnétique, monté fixe sur la bague fixe (172) ;
- une seconde culasse de retour de flux constituée par un bloc (182) en forme de secteur de couronne ayant la même dimension radiale que la paire d'aimants, ledit bloc (182) étant réalisé en matériau ferromagnétique à haute perméabilité, et, par ailleurs enchâssé dans le support (180) de manière à ménager un entrefer (186), d'épaisseur sensiblement constante, faible devant ses autres dimensions, entre le bloc (182) de la partie des aimants annulaires (176-177) qui lui fait face à un moment donné ;
- une sonde (184) de mesure de champ magnétique, collée audit bloc (182) sur le support (180), de manière à être sensiblement disposée au centre de l'entrefer (186).

## Claims

1. Linear sensor (72-102) of slight movements appearing between two components of an assembly integral with an open magnetic circuit (10-32) and with a field measurement probe (94-122) respectively, said magnetic circuit comprising two permanent magnets (12-14 or 34-38) substantially identical, juxtaposed and rigidly joined together, so as to present a continuous surface on which appear a North pole (20 or 35) and a South pole (22 or 39), separated from one another by a line of zero field (26 or 41) straddled by said probe; characterised in that:
- the two magnets (12-14 or 34-38) are joined to one another, by a first flux return yoke (16 or 36), of high magnetic permeability;
- a second flux return yoke (18 or 40) is disposed facing the continuous surface of the magnets (12-14 or 34-38);
- the space, between the second yoke (18 or 40) and the continuous surface of the magnets, constitutes an air gap (24 or 42) of thickness small in comparison with its width and length.

2. Sensor according to claim 1, characterised in that in the magnetic circuit the transverse cross-sections of the magnets (34-38) are isosceles triangles and in that the first flux return yoke is a third magnet (37) having its base parallel to those of the two others and its polarisation (37) orientated parallel to its base, in continuity of flux with the others (35-39).

3. Sensor according to claim 1, characterised in that the second flux return yoke is constituted by a further open magnetic circuit (12′-14′-16′ or 34′-36′-38′) similar to the preceding circuit (12-14-16 or 34-36-38) in which the polarities of the magnets are reversed, the two junction lines (26-26′) of the magnets being placed facing one another.

4. Sensor according to any of the preceding claims, characterised in that the magnets and the flux return yokes are co-axial rings (54-56 or 64-66), said magnets being polarised either radially or axially.

5. Rolling bearing with balls (70) of the kind comprising an inner race (74), an annular cage (78), balls (80), an outer race (82), one of the two races being rotational and the other fixed in rotation; and a sensor (72) for measuring axial relative movements of these two races, characterised in that said sensor (72) is of a magnetic type in accordance with claim 3 and comprises:
- a first pair of substantially identical annular magnets (84-86) provided with radially orientated opposing polarities, said magnets being juxtaposed and mounted fixed on the rotational race (74), which race has a high magnetic permeability;
- a second pair of substantially identical annular magnets (85-87) provided with radially orientated opposing polarities, said magnets being juxtaposed and mounted fixed on an annular flux return yoke so as to present opposite poles and ajunction line facing that of the first pair of magnets;
- an annular support in non-magnetic material arranged so as to maintain an air gap (90) of constant thickness, small in comparison with the two other dimensions, between the facing surfaces of the two pairs of magnets (84-86 and 85-87);
- a measurement probe (94) disposed at the centre of the air gap (90) in line with the junction lines of the magnets of each pair, said probe being mounted fixed on a small support in non-magnetic material (92) integral with the fixed race (82) of the rolling bearing.

6. Rolling bearing with balls (100) of the kind comprising an inner race (104), an annular cage (108), balls (110), an outer race (112), one of the two races being rotational and the other fixed in rotation and a sensor (102), for measuring radial relative movements of these two races, characterised in that said sensor (102) is of a magnetic type in accordance with claim 3 and comprises:
- two pairs (116-117 and 118-119) of substantially identical annular magnets provided with axially orientated opposing polarities, said magnets of one pair being respectively juxtaposed and rigidly joined together by a flux return yoke (115-121) constructed in material of high magnetic permeability in the form of flat ring, said pairs being mounted fixed on a same interposed ring (114) in non-magnetic material integral with the rotational race (104), said pairs of annular magnets facing one another, in placing the junction lines of the magnets of the two pairs facing one another and in maintaining an air gap (120) of constant thickness, small in comparison with the two other dimensions, between the facing surfaces of the two pairs of annular magnets (116-117 and 118-119);
- a measurement probe (122) disposed at the centre of the air gap (120) in line with the junction lines of the magnets of each pair, said probe being mounted fixed on a support (123), in non-magnetic material, integral with the fixed race (112) of the rolling bearing.

7. Rolling bearing with balls (130) of the kind comprising an inner race (134), a cage (138) balls (140), an outer race (142), one of these races being fixed in rotation and the other rotational, and a sensor (132) for measuring axial relative movements of these two races, characterised in that said sensor (132) is of a magnetic type in accordance with claim 1 and comprises:
- a pair of substantially identical annular magnets (144-146), provided with radially orientated opposing polarities, juxtaposed and mounted fixed on the rotational race (136), which race has a high magnetic permeability and constitutes the first flux return yoke;
- a support (148) in non-magnetic material, mounted fixed on the fixed race (142);
- a second flux return yoke, constituted by a block (150) constructed in material of high magnetic permeability, in the form of a ring or ring sector having an axial width of transverse cross-section substantially equal to that of the pair of magnets, said block (150) being disposed with respect to the part of the annular magnets (144-146) which faces it, so as to constitute an air gap (154) of substantially constant thickness, small in comparison with its width;
- a magnetic field measurement probe (152), bonded to said block (150) on the support (148) so as to be disposed substantially at the centre of the air gap (154).

8. Rolling bearing with balls (160) of the kind comprising an inner race (164), an annular cage (168), balls (170), an outer race (172), one of these races being fixed in rotation and the other rotational, and a sensor (162) for measuring radial relative movements of these two races, characterised in that said sensor (162) is of a magnetic type in accordance with claim 1 and comprises:
- a pair of annular magnets (176-177) having opposing and axially orientated senses of polarisation, said magnets being juxtaposed, rigidly joined together by a first flux return yoke in the form of a flat ring (178) constructed in material of high magnetic permeability and fixed by bonding to an intermediate ring (174) in non-magnetic material, integral with the rotational race (164);
- a support (180) in non-magnetic material, mounted fixed on the fixed race (172);
- a second flux return yoke constituted by a block (182) in the form of a ring sector having the same radial dimension as the pair of magnets, said block (182) being constructed in ferromagnetic material of high permeability, and, moreover set in the support (180) so as to provide an air gap (186), of substantially constant thickness, small in comparison with its other dimensions, between the block (182) of (sic) the part of the annular magnets (176-177) which faces it at a given moment;
- a magnetic field measurement probe (184) bonded to said block (182) on the support (180), so as to be substantially disposed at the centre of the air gap (186).

## Patentansprüche

1. Linearer Meßwertgeber (72-102) für kleine Verschiebungen, die zwischen zwei Teilen einer Anordnung auftreten, welche mit einem offenen magnetischen Kreis (10-32) bzw. einer Feldmeßsonde (94-122) verbunden sind, wobei der magnetische Kreis zwei im wesentlichen identische, benachbarte, fest miteinander verbundene Permanentmagnete (12-14 oder 34-38) derart aufweist, daß sie eine kontinuierliche Fläche bilden, auf der ein Nordpol (20 oder 35) und ein Südpol (22 oder 39) ausgebildet sind, die voneinander durch eine Feldlinie Null (26 oder 41) getrennt sind, die von der Sonde überlagert wird, **dadurch gekennzeichnet,** daß:
- die beiden Magnete (12-14 oder 34-38) miteinander über ein erstes Magnetflußjoch (16 oder 34) hoher magnetischer Permeabilität verbunden sind;
- ein zweites Magnetflußjoch (18 oder 40) gegenüber der kontinuierlichen Fläche aus den Magneten (12-14 oder 34-38) angeordnet ist;
- der Raum zwischen dem zweiten Joch (18 oder 40) und der kontinuierlichen Fläche aus den Magneten einen Spalt (24 oder 42) geringer Dicke bezuglich seiner Breite und seiner Lange darstellt.

2. Meßwertgeber nach Anspruch 1, **dadurch gekennzeichnet**, daß der magnetische Kreis der Querschnitte der Magneten (24-38) aus gleichschenkligen Dreiecken besteht, und daß das erste Magnetflußjoch ein dritter Magnet (37) ist, dessen Grundlinie parallel zu denjenigen der beiden anderen verläuft und dessen Feldrichtung (37) parallel zu seiner Grundlinie ausgerichtet ist, um einen kontinuierlichen Fluß mit den anderen (35-39) zu gewahrleisten.

3. Meßwertgeber nach Anspruch 1, **dadurch gekennzeichnet,** daß das zweite Magnetflußjoch durch einen anderen offenen magnetischen Kreis (12′-14′-16′ oder 34′-36′-38′) gebildet wird, welcher dem vorhergehenden (12-14-16 oder 34-36-38) ähnlich ist, wobei die Polrichtungen der Magnete umgekehrt sind, und die beiden Verbindungslinien (26-26′) der Magnete einander gegenüberliegen.

4. Meßwertgeber nach einem der vorhergehenden Ansprüche, **dadurch gekennzeichnet,** daß die Magnete und die Magnetflußjoche koaxiale Ringe (54-56 oder 64-66) sind, wobei die Magnete entweder radial oder axial magnetisiert sind.

5. Kugellager (70) mit einem Innenring (74), einem ringförmigen Käfig (78), Kugeln (80), einem Außenring (82), wobei sich einer der Ringe dreht und der andere drehfest ist, und mit einem Meßwertgeber (72) zur Messung der axialen Relativverschiebungen der beiden Ringe, **dadurch gekennzeichnet**, daß der Meßwertgeber (72) ein magnetischer Meßwertgeber nach dem Anspruch 3 ist und aufweist:
- ein erstes Paar ringförmiger, im wesentlichen identischer Magnete (84-86) mit radialen, entgegengesetzten Magnetisierungen, wobei diese Magnete einander benachbart sind und fest im sich drehenden Ring (74) angeordnet sind, welcher eine hohe magnetische Permeabilität besitzt;
- ein zweites Paar ringförmmiger, im wesentlichen identischer Magnete (85-87) mit radialen, einander entgegengesetzten Magnetisierungen, wobei diese Magnete benachbart sind und fest in einem ringförmigen Magnetflußjoch derart angeordnet sind, daß sie entgegengesetzte Pole aufweisen sowie eine Verbindungslinie, die gegenüber derjenigen des ersten Paares Magnete liegt;
- eine ringförmige Halterung aus einem nicht magnetischen Material, die so ausgestaltet ist, daß sie einen Spalt (90) konstanter Dicke aufweist, die klein gegenüber den beiden anderen Abmessungen ist und zwischen den Flächen der beiden Magnetpaare (84-86 und 85-87) ausgebildet ist;
- eine Meßsonde (94), die in der Mitte des Spaltes (90) in Verlängerung der Verbindungslinien der Magnete eines jeden Paares angeordnet ist, wobei die Sonde fest mit einer Halterung (92) aus einem nicht magnetischen Material verbunden ist, welche mit dem feststehenden Ring (82) des Lagers verbunden ist.

6. Kugellager (100) mit einem Innenring (104), einem ringförmigen Käfig (108), Kugeln (110), einem Außenring (112), wobei einer der beiden Ringe sich dreht und der andere drehfest ist, und mit einem Meßwertgeber (102), zur Messung der radialen Relativverschiebungen der beiden Ringe, **dadurch gekennzeichnet,** daß der Meßwertgeber (102) gemäß dem Anspruch 3 magnetisch ist und aufweist:
- zwei im wesentlichen identische, ringförmige Magnetpaare (116-117 und 118-119), mit axial ausgerichteten, entgegengesetzten Magnetisierungen, wobei die Magnete eines Paares benachbart und fest miteinander verbunden sind, mittels eines Magnetflußjoches (115-121), aus einem Material mit einer hohen magnetischen Permeabilität in Form einer ebenen Platte, wobei die beiden Paare fest an einer dazwischen angeordneten Platte (114) aus nicht magnetischem Material befestigt sind, welche an dem sich drehenden Ring (104) befestigt ist, und wobei die ringförmigen Magnetpaare einander gegenüberliegen, wobei die Verbindungslinien der Magnete der beiden Paare einander gegenüberliegen unter Ausbildung eines Spaltes (120) konstanter Dicke, welche klein ist gegenuber den beiden anderen Abmessungen, und der zwischen den sich gegenuberliegenden Flächen der beiden ringförmigen Magnetpaare (116-117 und 118-119) ausgebildet ist;
- eine Meßsonde (122) in der Mitte des Spaltes (120) in Verlängerung der Verbindungslinien der Magnete eines jeden Paares, wobei die Sonde fest mit einer Halterung (123) aus einem nicht magnetischen Material verbunden ist, welche am feststehenden Ring (112) des Lagers befestigt ist.

7. Kugellager (130) mit einem Innenring (134), einem Käfig (138), Kugeln (140), einem Außenring (142), wobei einer der Ringe feststeht und der andere sich dreht, und mit einem Meßwertgeber (132) zur Messung der axialen Relativverschiebungen der beiden Ringe, **dadurch gekennzeichnet,** daß der Meßwertgeber (132) magnetisch ist gemäß dem Anspruch 1 und aufweist:
- ein Paar im wesentlichen identischer, ringförmiger Magnete (144-146) mit radial ausgerichteten, entgegengesetzten Magnetisierungen, die zueinander benachbart und fest am sich drehenden Ring (136) angeordnet sind, welcher eine hohe magnetische Permeabilität aufweist, und das erste Magnetflußjoch darstellt;
- eine Halterung (148) aus nicht magnetischem Material, welche am feststehenden Ring (142) befestigt ist;
- ein zweites Magnetflußjoch, bestehend aus einem Block (150) aus einem Material mit hoher magnetischer Permeabilität in Form einer Platte oder eines Plattenabschnitts, mit einer axialen Breite des Querschnitts, die im wesentlichen gleich derjenigen des Magnetpaars ist, wobei der Block (150) dergestalt bezüglich desjenigen Abschnitts der ringförmigen Magnete (144-146), der ihm gegenuberliegt, angeordnet ist, daß ein Spalt (154) mit im wesentlichen konstanter Dicke ausgebildet ist, welche klein gegenüber ihrer Breite ist;
- eine Meßsonde (152) für das Magnetfeld, welche mit dem Block (150) an der Halterung (148) derart angeklebt ist, daß sie im wesentlichen in der Mitte des Spaltes (154) angeordnet ist.

8. Kugellager (160) mit einem Innenring (164), einem ringförmigen Käfig (168), Kugeln (170), einem Außenring (172), wobei einer der Ringe drehfest ist und der andere sich dreht, und mit einem Meßwertgeber (162), zur Messung der radialen Relativverschiebungen dieser beiden Ringe, **dadurch** **gekennzeichnet**, daß der Meßwertgeber (172) magnetisch ist gemäß dem Anspruch 1 und aufweist:
- ein Paar ringförmiger Magnete (176-177) mit axial ausgerichteten, entgegengesetzten Magnetisierungen, wobei die Magnete zueinander benachbart und fest miteinander verbunden sind mittels eines ersten Magnetflußjoches in Form einer ebenen Platte (178) aus einem Material mit einer hohen magnetischen Permeabilität und mit einer Zwischenplatte (174) aus einem nicht magnetischen Material verklebt sind, welche mit dem sich drehenden Ring (164) verbunden ist:
- eine Halterung (180) aus einem nicht magnetischen Material, welche am feststehenden Ring (172) befestigt ist;
- ein zweites Magnetflußjoch, bestehend aus einem Block (182), dessen Form einem Plattenabschnitt entspricht, der die gleiche radiale Abmessung wie das Magnetpaar aufweist, wobei der Block (182) aus einem ferromagnetischen Material mit hoher Permeabilität besteht, und im Klemmsitz in der Halterung (180) derart sitzt, daß ein Spalt (186) mit im wesentlichen konstanter Dicke ausgebildet wird, welche klein gegenüber ihren anderen Abmessungen ist, und zwar zwischen dem Block (182) und demjenigen Abschnitt der ringförmigen Magnete (176-177), der ihm zu einem gegebenen Zeitpunkt gegenüberliegt;
- eine Meßsonde (184) fur das Magnetfeld, welche am Block (182) an der Halterung (180) angeklebt ist, um so im wesentlichen in der Mitte des Spaltes (186) angeordnet zu sein.
